# EUROPEAN PATENT SPECIFICATION

(11) **EP 3 128 718 B1**
(45) Date of publication and mention of the grant of the patent: **29.08.2018**
(21) Application number: 15783107.4
(22) Date of filing: 20.04.2015
(51) Int. Cl.: H04L 29/08

(54) **SERVICE DISCOVERY METHOD AND DEVICE**
DIENSTENTDECKUNGSVERFAHREN UND VORRICHTUNG
PROCÉDÉ DE DÉCOUVERTE DE SERVICE, ET DISPOSITIF

(30) Priority: 26.04.2014 CN 201410180491
(43) Date of publication of application: 08.02.2017
(73) Proprietor: Huawei Device (Dongguan) Co., Ltd., Dongguan, Guangdong 523808 (CN)
(72) Inventor: CHEN, Ji, Shenzhen Guangdong 518129 (CN); DING, Zhiming, Shenzhen Guangdong 518129 (CN); FANG, Ping, Shenzhen Guangdong 518129 (CN); YANG, Yunsong, Shenzhen Guangdong 518129 (CN)
(74) Representative: Isarpatent
(86) International application number: PCT/CN2015/076983
(87) International publication number: WO 2015/161767

(56) References cited:
- CN-A- 101 965 029
- CN-A- 102 907 125
- CN-A- 103 179 634
- CN-A- 103 298 068
- US-A1- 2011 103 264
- US-A1- 2013 250 803

## Description

### TECHNICAL FIELD

The present invention relates to the field of communications technologies, and in particular, to a service discovery method and an electronic first device.

### BACKGROUND

A wireless local area network standard 802.11 formulated by the IEEE defines two network architecture modes. One is an infrastructure-based mode, that is, one node is used as an access point (Access Point, AP), and other nodes are used as stations (Station, STA), where the access point provides an access service, the others nodes are connected to the access point, and access a network by using the access point. The other is an independent basic service set (Independent Basic Service Set, IBSS) mode, where in this network architecture, devices are equal stations, and a connection is set up between each two of the devices. In specific implementation, in some scenarios, for example, when two mobile phones need to be connected to each other, the 802.11 standard cannot conveniently implement discovery and a connection between the two devices.

On this basis, the Wi-Fi Alliance formulates the Wi-Fi Direct standard, and further defines how two devices are discovered by each other and set up a connection. Specifically, each of the two devices randomly sends a probe message or listens to a probe message of the other device on three channels: 1, 6, and 11. If one of the devices obtains the message by listening and replies with a response, it indicates that the two devices are discovered by each other. Then, the two devices start to negotiate for who acts as a group owner (Group Owner, GO), and a group owner device is equivalent to a role of the access point. The other device serves as a group client (Group Client), and a group client device is equivalent to a role of the station. The group client device applies to the group owner device for an association, and then a connection is set up.

The Wi-Fi Direct standard defines only a discovery and connection issue between two devices at a Wi-Fi layer, and a service layer at the Wi-Fi layer is not involved. In this case, such a situation occurs: Devices of manufacturers can set up a Wi-Fi layer connection by using a Wi-Fi standard, but upper-layer services are not the same between the devices. For example, the TCP protocol is used at an upper layer for a file transfer service of a manufacturer A, and the UDP protocol is used at the upper layer for a file transfer service of a manufacturer B. In this way, service layers of the manufacturers cannot intercommunicate. Based on such a situation, the Wi-Fi Alliance formulates the Wi-Fi Direct Service (WFDS) standard based on the Wi-Fi Direct standard. The WFDS standard specifies upper-layer interaction, so that the upper-layer services of the manufacturers can intercommunicate; for example, the two devices both use a UPnP File Transfer protocol for the file transfer service.

In the prior art, in a process of using the foregoing standards, if two devices are both connected to a same access point, for example, a mobile phone and a television on a home area network are connected to a router at home, and the two devices set up a service connection, a discovery query party (such as the mobile phone) needs to be disconnected from the access point (such as the router) first, a first device (such as the mobile phone) needs to randomly send a probe message (or listen to a probe message) on channels: 1,6, 11, and after a second device (such as the television) obtains the probe message by listening and replies with a response message (or replies with a response message), the first device (such as the mobile phone) and the second device (such as the television) are discovered by each other. Afterwards, the two devices negotiate for who acts as a group owner, and the other device serves as a group client. A group client device applies to a group owner device for an association, and then a connection is set up for data transmission. In the foregoing Wi-Fi Direct standard and WFDS standard, only a manner in which two devices are directly discovered and connected is considered, and a situation of how to implement discovery and a connection between two devices in a case in which the two devices are connected to a same access point is not considered.

Service discovery methods are also known from US 2013/250803 A1 and US 2011/103264. In the first mentioned document US 2013/250803 A1 a first device, an access point and a second device exchange messages during a service discovery method. In so doing the first device in the form of a mobile station sends a service discovery message to the access point which in turn sends the message to the second device which is also connected to the access point. The service query message is encapsulated in a portion of a data frame. Furthermore, in the second mentioned document US 2011/103264 a service discovery request and a service discovery response procedure is carried out between a first and a second device both connected to an access point. The access point receives a service discovery request including addresses of the first device, the second device and a broadcast address and adjust the addresses when forwarding the service discovery requested to the second device. Also in this method the discovery request is encapsulated in a data frame exchanged between the first and second device.

### SUMMARY

Embodiments of the present invention provide a service discovery method and an electronic device (hereinafter also called the "first" device), to solve the technical objective of how to implement, by using an access point, discovery and upper-layer connection setup between devices in a case in which the devices are connected to the access point, so as to implement intercommunication between the devices in terms of upper-layer services. This objective is solved by a service discovery method according to claim 1 and a first device according to claim 9. Further advantageous embodiments and improvements of the invention are listed in the dependent claims.

In the embodiments of the present invention, in a scenario in which multiple electronic devices are all connected to an access point, a service discovery message exchange among the multiple electronic devices can be implemented without disconnecting the electronic devices from the access point, thereby improving service discovery efficiency, and further improving intercommunication efficiency. In the embodiments of the present invention, an application range of the Wi-Fi Direct Service is expanded, and user experience is improved.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a flowchart of complete service discovery and connection setup according to the prior art;
FIG. 2 is a structural diagram of a data frame defined in the IEEE 802.11;
FIG. 3 is a structural diagram of a data frame defined in the WFDS standard;
FIG. 4 is a flowchart of an embodiment of a service discovery method according to an embodiment of the present invention;
FIG. 5 is a flowchart of an embodiment of a service discovery method according to an embodiment of the present invention;
FIG. 6 is a flowchart of an embodiment of a service discovery method according to an embodiment of the present invention;
FIG. 7 is a schematic structural diagram of an embodiment of an electronic device according to an embodiment of the present invention; and
FIG. 8 is a schematic structural diagram of an embodiment of an electronic device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

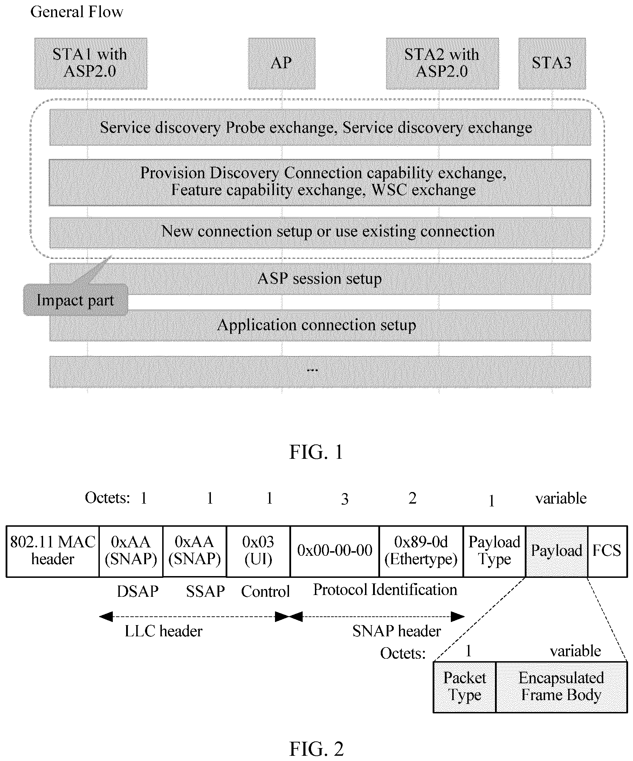

Before embodiments of the present invention are specifically described, steps that need to be performed in service discovery and a connection are first briefly described. As shown in FIG. 1, FIG. 1 is a general flowchart of complete service discovery and connection setup according to the prior art. The complete service discovery and connection setup includes the following steps:
service discovery (Service Discovery), which is used to probe a device that can support a service required by a local device; where the service discovery includes a Probe exchange and a service discovery exchange, and Wi-Fi messages used in the foregoing two exchanges are different;
capability negotiation (Provision Discovery), which includes a connection capability exchange (connection capability exchange), a function exchange (feature capability exchange), a WSC exchange (Wi-Fi Simple Configuration exchange), and the like; in this step, connection capabilities of two devices, a state in which each device is in, how to connect, and the like are mainly confirmed;
a connection phase, where it is determined, according to a negotiation result in a capability negotiation phase, whether the two devices are interacted by setting up a new connection or by using an original connection, or the like;
an ASP session setup phase, where the ASP is performed based on a network layer (IP layer), an IP address of a peer device can be obtained regardless of setting up the new connection or using the original connection, before the two parties set up an ASP session, the service query party acquires IP address information of the counterpart device, based on the IP address, the two parties set up the ASP session. For example, the service query party sends, based on the IP address, a REQUEST_SESSION message to a service responding party at the IP network layer; in the existing WFDS standard, the REQUEST_SESSION message is sent to a MAC layer and is transmitted at the MAC layer, and is directly sent by the service query party to the service responding party; in an environment in which an access point participates in, the message is forwarded by the AP at the MAC layer, and alternatively, certainly, if a TDLS direct link has been set up, the message may be sent by the service query party to the service responding party; and
a service setup phase, where based on the ASP session, an upper-layer service is set up, such as a photo-uploading service, and after the ASP session is set up, based on an application program connection and a data exchange at the IP network layer, the two parties set up an Application socket connection and perform data transfer; in the existing WFDS standard, the foregoing exchange message is also directly transmitted between the service query party and the service responding party at the MAC layer; in an environment in which the access point participates in, when these messages are carried at the MAC layer, these messages may be forwarded by the AP, and alternatively, similarly, if a TDLS direct link has been set up, an exchange of these messages may be directly performed between the service query party and the service responding party.

In the foregoing ASP session setup phase and service setup phase, a method in the existing ASP may be directly used, and whether there is an access point in an application environment does not have too great impact on the two steps. However, in the foregoing service discovery phase, capability negotiation phase, and connection phase, in a case in which the access point exists, a processing manner in the embodiments of the present invention is different from that in the existing ASP.

In the foregoing steps in the service discovery phase, capability negotiation phase, and connection setup phase, the following exchange information may be included, such as messages such as a Probe Request, a Probe Response, a service discovery Request, a service discovery Response, a provision discovery request, and a provision discovery Response. In a specific interaction process, in the existing WFDS standard, these messages are sent from a station to another station in a form of a management frame. However, in a network architecture in which there is an access point, these messages may be forwarded by the access point. When the access point forwards these messages, the foregoing exchange information may be transferred in a manner of a data frame, which is also one of invention points of the present invention. According to different standardization organizations, a data frame may be defined in two manners by the IEEE and the WFA. The two manners are generally similar, but are different in details. The following describes a format of a data frame in an IEEE 802.11 standard and a format of a data frame in the WFDS standard of the WFA.

In the IEEE 802.11 standard, a format of a data frame may be shown in FIG. 2. FIG. 2 shows a structure of a data frame defined in the IEEE 802.11. A 802.11 MAC Header is a frame header, and the header includes frame control (Frame Control), duration/an ID (Duration/ID), a receive address (Address 1), a transmit address (Address 2), sequence control (Sequence Control), high throughput control (High Throughput Control), and the like, and especially includes related address information. An LLC Header is a header at an LLC layer. An SNAP Header is an extended LLC header, and when an Ether type in the SNAP Header is set to 0x890d, it indicates that a 802.11 management protocol is carried behind, which is defined in an existing standard. A Payload Type now has been defined. For example, when the Payload Type is 2, it indicates that a TDLS (Tunnel Direct-Link Setup, Tunneled Direct Link Setup) management frame is carried behind. In the embodiments of the present invention, to carry a WFDS management frame (that is, the foregoing exchange information), a new Payload Type may be added to the structure of the data frame. For example, the Payload Type is 3, which indicates that the WFDS management frame is carried behind. Specifically, because the exchange information is different, the management frame needs to be differentiated. For example, one bit at a Payload part can be taken out to represent a type of the management frame, and the bit can be referred to as a Packet Type. For example, when the Packet Type is 0, the bit is used to indicate that the type of the management frame is a P2P Probe Request; when the Packet Type is 1, the bit is used to indicate that the type of the management frame is a P2P Probe Response; when the Packet Type is 2, the bit is used to indicate that the type of the management frame is a P2P service discovery request; when the Packet Type is 3, the bit is used to indicate that the type of the management frame is a P2P service discovery Response; when the Packet Type is 4, the bit is used to indicate that the type of the management frame is a P2P provision discovery request; when the Packet Type is 5, the bit is used to indicate that the type of the management frame is a P2P provision discovery Response. In a specific implementation process, the management frame can be fully encapsulated into the data frame, or only a frame body part of the management frame may be encapsulated, and a frame header of the management frame is not encapsulated.

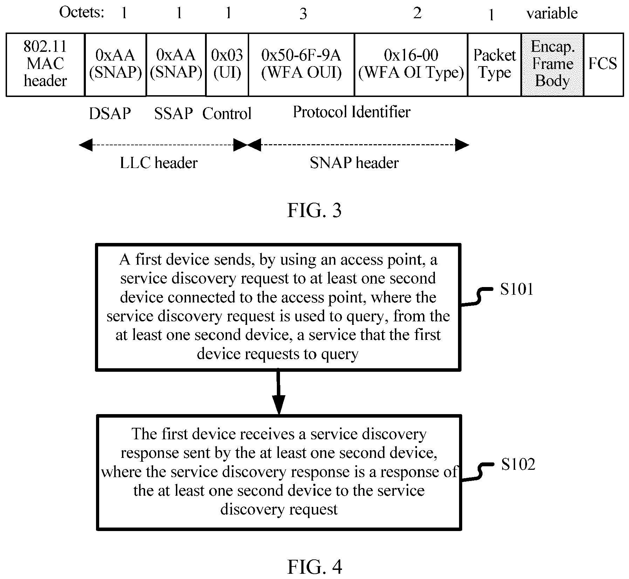

In the WFDS standard of the WFA, a format of a data frame may be shown in FIG. 3. FIG. 3 shows a structure of a data frame defined in the WFDS standard. In the first part in an SNAP header, 0x506F9A is used to indicate that this part of the data frame is content defined by the WFA; in the second part, a value is used to indicate that this part is content defined in ASP2.0, and the value is designated by the WFA, for example, the value may be Ox1600. A Packet Type and a frame content part may be the same as those used in the 802.11.

It should be understood that, in a Protocol Identifier, the first three bits represent an organization, and the last two bits represent a type. For example, in the IEEE 802.11 standard, 0x000000 represents the IEEE, and 0x890d represents the 802.11 management protocol; in the WFDS standard of the WFA, 0x506F9A represents the WFA, and 0x1600 represents a WFDS management protocol. Certainly, in an actual application, 0x1600 is not necessarily used for the WFDS management protocol, and another value may also be used for substituting.

Specifically, as shown in FIG. 4, a service discovery method provided in an embodiment of the present invention may include the following steps, and the method may be executed by a discovery query party, so as to acquire information about a service queried by the discovery query party. The discovery query party is a party that sends a service discovery request and receives a service discovery response. In this embodiment of the present invention, the other party opposite to the discovery query party is a discovery responding party, where the responding party receives the service discovery request of the discovery query party, and sends the service discovery response to the discovery query party. The service discovery response includes related information of the service queried by the discovery query party.
S101. A first device sends, by using an access point, a service discovery request to at least one second device connected to the access point, where the service discovery request is used to query, from the at least one second device, a service that the first device requests to query.

Specifically, the first device is connected to the access point, and the access point is connected to at least two devices. In addition to the first device, the access point is at least connected to the at least one second device. The first device sends the service discovery request by using the access point, where the service discovery request is used to query, from the at least one second device, the service that the first device requests to query. The service discovery request may include information, such as a name or a corresponding ID value of the service that the first device queries, about the service that the first device requests to query. That the first device requests to query the service may not only include querying a service supported by the second device, but also include querying a service that is not supported by the second device. The queried service may not only include a type of the queried service, but also include a specific queried service, such as a related parameter of the service itself and service content. For example, the service discovery request is used to request to query a play service. The service discovery request may be used to request to query whether the second device supports the play service, and the queried service may further include a type to which the play service belongs, and specific content of the play service. The play service may belong to an entertainment type, and in this case, the service discovery request may be used to request to query an entertainment type of the second device, and then query the play service from the entertainment type; or may be used to directly query the play service supported by the second device, such as a video format supported by play and play resolution. After acquiring the name or the ID value, of the service, included in the service discovery request, the at least one second device can determine whether the service corresponding to the name or the ID value is supported, and in a case in which the service is supported, determines specific content of the service.

Optionally, the service discovery request is in a format of a data frame, where the data frame is a type of a frame defined by Wi-Fi, and the data frame includes a frame header and a frame body. The frame header of the data frame may include three addresses, and names of the three addresses may be respectively Address 1 (A1), Address 2 (A2), and Address 3 (A3). Address information included in the frame header and a sequence of the address information can be adjusted according to a difference in a sender and a receiver of the data frame. When the data frame is a data frame sent by a device to the access point, the addresses in a frame header of the data frame are successively: A1, A2, and A3, where A1 is an address of a direct receiver, A2 is an address of a direct sender, and A3 is a final target address. When the data frame is a data frame sent by the access point to a device, A1 is an address of a direct receiver and is also a target address, A2 is an address of a direct sender, and A3 is an initial source address.

Optionally, the service discovery request may be a management frame or a control frame. The first device sends the service discovery request by using the access point, and the access point receives the service discovery request sent by the first device. The access point parses the management frame or the control frame, and the access point may process the management frame or the control frame according to a preset rule. The access point sends the processed management frame or control frame to the at least one second device.

Optionally, the first device may broadcast the service discovery request by using the access point. The service discovery request is in the format of a data frame. When the first device sends the service discovery request to the access point, A1 (target address information) is address information of the access point, and A3 (final target address information) may not be specific address information of the second device, but a broadcast address (Broadcast Address). The broadcast address is an address that is exclusively used to be simultaneously sent to the second device on a network. At a MAC layer, the broadcast address includes a 48-bit host ID host ID segment, and each bit of the 48-bit host ID host ID segment is 1, which indicates that the address is a broadcast address. In this case, a frame header of a data frame of the service discovery request sent by the first device to the access point successively includes: an address of the access point, an address of the first device, and a broadcast address. After receiving the service discovery request of the first device, the access point changes an address format in the frame header of the data frame of the service discovery request, sets the broadcast address as A1 (target address information), and broadcasts the data frame that is of the service discovery request and whose frame header includes a changed address format, so that the second device connected to the access point can receive the service discovery request broadcast by the access point. A frame header of the data frame of the service discovery request broadcast by the access point successively includes: the broadcast address, the address of the access point, and the address of the first device.

Optionally, the first device may send, in a unicast manner by using the access point, the service discovery request to the second device connected to the access point. The first device learns a Mac address of the second device, and sends, in a unicast manner, the service discovery request to the second device corresponding to the Mac address. In this case, a frame header of a data frame of the service discovery request sent by the first device to the access point successively includes: an address of the access point, an address of the first device, and an address of the second device. A frame header of the data frame of the service discovery request unicast by the access point successively includes: the address of the second device, the address of the access point, and the address of the first device.

Optionally, the service discovery request may include a first service discovery request and a second service discovery request. The first device sends the first service discovery request to the second device, where the first service discovery request may include an ID value of a service required by the first device. The ID value of the service may be a hash value obtained by performing hash calculation on a name of the service. After acquiring the first service discovery request, the second device acquires the ID value of the service, and acquires the name of the service according to the ID value. The first service discovery response may include the name of the service. After acquiring the first service discovery response sent by the second device, the first device acquires the name of the service. When the first device needs to further learn detailed information of the service, the first device may send the second service discovery request to the second device, where the second service discovery request may include the name of the service, and the second service discovery request is used to request to acquire specific information of the second device in terms of the service corresponding to the name of the service. The first device receives a second service discovery response sent by the second device, where the second service discovery response is a response of the second device to the second service discovery request. Specifically, the first service discovery request may be a Probe Request, and the first service discovery response may be a Probe Response. The second service discovery request may be a Service Discovery Request, and the second service discovery response may be a Service Discovery Response.

Optionally, the first service discovery request broadcast by the first device to the at least one second device by using the access point may be a Probe Request. The Probe Response may carry a name or a type of a service that the first device expects to discover, where the name or the type of the service may be included in the Probe Request in a form of a hash value. The first device may encapsulate the Probe Request into a data frame, and the access point forwards the data frame. The first device broadcasts, by using the access point, the first service discovery request to the at least one second device connected to the access point. That is, the first device sends, to the access point, the data frame that carries the Probe Request, and the access point broadcasts, to the at least one second device, the data frame that includes the Probe Request. When the data frame is a data frame sent by the first device to the access point, three addresses included in the data frame may be successively: the address of the access point, the address of the first device, and the broadcast address. When the data frame is a data frame broadcast by the access point to the at least one second device, the three addresses included in the data frame may be successively: the broadcast address, the address of the access point, and the address of the first device. After receiving the first service discovery request sent by the first device, the access point broadcasts the first service discovery request to the at least one second device connected to the access point. When the first service discovery request sent by the first device is in a format of a data frame, the access point changes address information in a frame header of a data frame of the first service discovery request, and the three addresses in information in a frame header of the changed data frame are successively: the broadcast address, the address of the access point, and the address of the first device. The access point broadcasts, to the at least one second device associated with the access point, the data frame whose frame header is changed. Alternatively, the first device sends, in a unicast manner by using the access point, the first service discovery request to the at least one second device connected to the access point. That is, the first device has learned address information of the second device connected to the access point; the first device sends, to the access point, the data frame that carries the Probe Request, where the data frame carries the address information of the second device; the access point sends, to the at least one second device, the data frame that includes the Probe Request. When the data frame is a data frame of the service discovery request sent by the first device to the access point, addresses included in a frame header of the data frame are successively: information about the access point, information about the first device, and information about the second device. When the data frame is a data frame sent by the access point to the second device in a unicast manner, addresses included in a frame header of the data frame may be successively: the address of the second device, the address of the access point, and the address of the first device. The access point sends, in a unicast manner and to the at least one second device associated with the access point, the data frame whose frame header is changed.

Optionally, the first service discovery request broadcast by the first device to the at least one second device by using the access point may be a Service Discovery Request.

A frame body part of the data frame of the service discovery request includes a frame body part of a probe request frame, or a frame body part of a service discovery request frame. Specifically, the data frame of the service discovery request may include a frame header part and the frame body part. Only the frame body part of the probe request frame, such as a frame body part of a Probe Request may be encapsulated into the frame body part, and a frame header part of the Probe Request is not included. Alternatively, only the frame body part of the service discovery request frame, such as a frame body part of the Service Discovery Request may be encapsulated into the frame body part, and a frame header part of the Service Discovery Request is not included. Address information in the frame header part of the data frame of the service discovery request is set according to a specific interaction object.

The Service Discovery Request/Response herein may be specifically a generic advertisement service request/response (generic advertisement service request/response) defined in a 802.11 standard, which is referred to as a GAS request/response for short, or may be another service discovery request/response that is exclusively defined.
S102. The first device receives a service discovery response sent by the at least one second device, where the service discovery response is a response of the at least one second device to the service discovery request.

After receiving the service discovery request sent by the access point, the second device parses the service discovery request and acquires the information about the service that the first device requests to query. When the second device supports the service that the first device requests to query, the second device generates the service discovery response. Optionally, the service discovery response may include only information that the second device supports the service, and does not involve information about the service itself, such as a type of the service and specific content of the service. Optionally, the service discovery response may include the service that is supported by the at least one second device and the first device requests to query, and the service discovery response not only includes information that the second device supports the service, but also includes information about the service itself, such as a type of the service and specific content of the service. When the second device does not support the service that the first device requests to query, the second device may also generate the service discovery response, where the service discovery response includes information that the second device does not support the service. When the second device does not support the service that the first device requests to query, the second device may not generate the service discovery response either, and a current service discovery exchange process ends.

Optionally, when the service discovery request is a Probe Request, the service discovery response is a Probe Response. The Probe Response is a response of the second device to the Probe Request sent by the first device.

Optionally, when the service discovery request is a Service Discovery Request, the service discovery response is a Service Discovery Response. The Service Discovery Response is a response of the second device to the Service Discovery Request sent by the first device.

Optionally, when the service discovery request includes multiple exchange messages, the second device may separately respond to different service discovery requests. For example, when the first service discovery request sent by the first device is a Probe Request, the second device responds to the Probe Request, and sends a Probe Response to the first device. When the second service discovery request sent by the first device is a Service Discovery Request, the second device responds to the Service Discovery Request, and sends a Service Discovery Response to the first device.

Optionally, the second device may directly send the first service discovery response to the first device, where the first service discovery response is in a format of a management frame. A frame header of the management frame may include three addresses: A1, A2, and A3, where A1 is an address of a direct receiver, A2 is an address of a direct sender, and A3 is a BSSID (Basic Service Set IDentifier, basic service set identifier), where the BSSID is a MAC (MAC, Medium Access Control, Medium Access Control) address of the access point to which the first device and the second device are jointly connected. Specifically, the three addresses included in the frame header of the management frame may be successively: the address of the first device, the address of the second device, and the address of the access point.

Optionally, the second device may send the first service discovery response to the first device by using the access point, and the first device receives the first service discovery response sent by the second device by using the access point, where the first service discovery response is in a format of a data frame. Addresses in a frame header of a data frame of the first service discovery response sent by the second device to the access point may be successively: the address of the access point, the address of the second device, and the address of the first device. After receiving the first service discovery response sent by the second device to the first device by using the access point, the access point adjusts the addresses in the frame header of the data frame of the first service discovery response, and adjusted addresses in a frame header of the data frame may be successively: the address of the first device, the address of the access point, and the address of the second device. The first device receives the data frame that is of the first service discovery response and whose frame header includes the adjusted addresses, where the data frame is sent by the access point.

In this embodiment of the present invention, in a scenario in which multiple electronic devices are all connected to an access point, a service discovery message exchange among the multiple electronic devices can be implemented without disconnecting the electronic devices from the access point, thereby improving service discovery efficiency, and further improving intercommunication efficiency. For example, in a scenario in which a discovery query party and a discovery responding party are both connected to the access point, a connection between the discovery query party and the discovery responding party can be implemented without disconnecting the discovery query party from the access point, thereby improving service discovery efficiency, and further improving intercommunication efficiency.

In an embodiment of the present invention, the service discovery request includes the first service discovery request and the second service discovery request. Specifically, the first service discovery request is a Probe Request, and the first service discovery response is a Probe Response; the second service discovery request is a Service Discovery Request, and the second service discovery response is a Service Discovery Response, where the Service Discovery Response is a response of the second device to the Service Discovery Request sent by the first device. The first device sends the first service discovery request by using the access point, where the first service discovery request is in a format of a data frame. The first device receives the first service discovery response sent by the second device. The second device may send the first service discovery response by using the access point, and in this case, the first service discovery response is in a format of a data frame; or the second device may directly send the first service discovery response to the first device, and in this case, the first service discovery response is in a format of a management frame.

Optionally, it can be implemented that an exchange of the second service discovery request and the second service discovery response is directly performed between the first device and the second device without forwarding by the access point. The first device may directly send the second service discovery request to the second device without using the access point. The first device sends the Service Discovery Request management frame to the second device, where a frame header of the management frame may include three addresses: A1, A2, and A3, where A1 is an address of a direct receiver, A2 is an address of a direct sender, and A3 is a BSSID. Specifically, the three addresses included in the frame header of the management frame may be successively: the address of the second device, the address of the first device, and the address of the access point. After receiving the second service discovery request sent by the first device, the second device acquires the Service Discovery Request, and generates a response, that is, the second service discovery response Service Discovery Response, to the Service Discovery Request. The second device sends the Service Discovery Response management frame to the first device. A frame header of the management frame may include three addresses: A1, A2, and A3, where A1 is an address of a direct receiver, A2 is an address of a direct sender, and A3 is a BSSID. Specifically, the three addresses included in the frame header of the data frame may be successively: the address of the first device, the address of the second device, and the address of the access point. After acquiring the Service Discovery Response management frame, the first device acquires the second service discovery response and acquires detailed information of the service.

Optionally, it can be implemented that an exchange of the second service discovery request and the second service discovery response is performed among the first device, the second device, and the access point by forwarding by the access point. The first device may send the second service discovery request to the second device by using the access point, where the second service discovery request may be a data frame that includes the Service Discovery Request management frame. The including the management frame may be including only a frame body part of the management frame, or may be including a frame header and a frame body part of the management frame. Addresses in a frame header of the data frame are successively arranged according to the foregoing arrangement rule. That is, when the data frame is a data frame sent by a device to the access point, A1 is an address of a direct receiver, A2 is an address of a direct sender, and A3 is a final target address; when the data frame is a data frame sent by the access point to a device, A1 is an address of a direct receiver and is also a target address, A2 is an address of a direct sender, and A3 is an initial source address. Therefore, when the first device sends the second service discovery request to the access point, three addresses that can be included in a frame header of the data frame are specifically respectively: the address of the access point, the address of the first device, and the address of the second device. After receiving the second service discovery request sent by the first device, the access point changes the addresses in the frame header of the data frame of the second service discovery request, and the three addresses included in the frame header of the data frame may be specifically changed to the following: the address of the second device, the address of the access point, and the address of the first device. After acquiring the second service discovery request sent by the access point, the second device acquires the Service Discovery Request sent by the first device. The second device generates the Service Discovery Response, where the Service Discovery Response includes detailed information of a service corresponding to a name that is of the service and that is included in the Service Discovery Request. The second device encapsulates the Service Discovery Response into a data frame. The second device may send, to the first device by using the access point, the data frame that includes the Service Discovery Response. Address information included in a frame header of the data frame of the second discovery response sent by the second device to the access point is successively: the address of the access point, the address of the second device, and the address of the first device. After acquiring the data frame of the second discovery response sent by the second device, the access point changes the address information included in the frame header of the data frame. Address information included in a changed frame header is successively: the address of the first device, the address of the access point, and the address of the second device. The first device receives the second discovery response forwarded by the access point. It can be implemented that an exchange of the second service discovery request and the second service discovery response is performed among the first device, the second device, and the access point by forwarding by the access point.

Optionally, an exchange of the second service discovery request and the second service discovery response may be partially performed by forwarding by the access point. That is, the second service discovery request is forwarded by the access point, and the second service discovery response is directly sent between the first device and the second device; or the second service discovery request is directly sent between the first device and the second device, and the second service discovery response is forwarded by the access point. This embodiment of the present invention sets no limitation on a possible exchange form of the second service discovery request and the second service discovery response.

It should be noted that, in the foregoing exchange forms in this embodiment of the present invention, when an access point participates in the exchange of the second service discovery request and the second service discovery response, for a message that the access point participates in, such as a message received by the access point or a message sent by the access point, a format of the message is a format of a data frame. Exchange information in the format of a management frame is encapsulated into exchange information in the format of a data frame. In the encapsulation, only a frame body of a management frame may be encapsulated into a data frame, or both a frame header and a frame body of a management frame may be encapsulated into a data frame. When no access point participates in the exchange of the second service discovery request and the second service discovery response, and a message is directly sent between the first device and the second device, a format of the message is a format of a management frame.

After acquiring the first service discovery response sent by the second device, the first device sends the second service discovery request to the second device. The second service discovery request carries the name of the service that is included in the first service discovery response. The second device receives the second service discovery request sent by the first device, acquires the name of the service, and generates the second service discovery response, where the second service discovery response includes detailed description of the service corresponding to the name of the service, so that the first device acquires specific provision information of the second device in terms of the service, such as whether the service is supported, a supported type of the service, and a level and parameter of the supported service. Accordingly, the first device can determine whether the service is a service required by the device, and further determine whether to set up a connection, thereby improving connection efficiency.

In an embodiment of the present invention, the frame body part of the data frame of the service discovery request includes the frame body part of the probe request frame or the frame body part of the service discovery request frame. Specifically, the data frame of the service discovery request includes a frame header and a frame body. The probe request frame and the service discovery request frame both are management frames, where the management frame also includes a frame header and a frame body. The probe request frame is a Probe Request, and the service discovery request frame is a service discovery Request. The frame body part of the data frame of the service discovery request may include a frame header and a frame body of the probe request frame, or may include only the frame body part of the probe request frame. Similarly, the frame body part of the data frame of the service discovery request may include a frame header and a frame body of the service discovery request frame, or may include only the frame body part of the service discovery request frame.

In an embodiment of the present invention, the service discovery response includes IP address information of the second device. Still further, before the first device and the second device set up an ASP session, the first device may acquire the IP address information of the second device by using any response message acquired in interacting with the second device. Optionally, the first service discovery response includes the IP address information of the second device; for example, the Probe Response carries the IP address information of the second device. Optionally, the second service discovery response includes the IP address information of the second device; for example, the service discovery Response carries the IP address information of the second device. Optionally, a first capability negotiation response includes the IP address information of the second device; for example, the provision discovery Response carries the IP address information of the second device. Optionally, a second capability negotiation response includes the IP address information of the second device; for example, the Follow-on provision discovery Response carries the IP address information of the second device.

In an embodiment of the present invention, before the first device and the second device set up an ASP session, the first device may acquire IP address information of the second device according to the reverse address translation protocol (Reverse Address Resolution Protocol, RARP). The method further includes: the service discovery response includes a MAC address of the second device, and after the first device receives the service discovery response sent by the at least one second device, sending, by the first device, a query request to a reverse address translation protocol server, where the query request includes the Mac address of the second device, and the query request is used to query the IP address information of the second device; and receiving, by the first device, a query response sent by the reverse address translation protocol server, where the query response includes the IP address information of the second device. Specifically, when the first device sends the service discovery request to the second device in a unicast manner, the first device has acquired the Mac address of the second device. When the first device broadcasts the service discovery request by using the access point, the first device receives the service discovery response sent by the second device, and acquires the Mac address included in the service discovery response. The first device sends an address query request to the reverse address translation protocol server. The reverse address translation protocol server stores the Mac address and an IP address that are of the second device, and a mapping relationship between the two addresses. After receiving the address query request sent by the first device, the reverse address translation protocol server acquires the MAC address of the second device, and the reverse address translation protocol server acquires the IP address of the second device according to the MAC address of the second device. The reverse address translation protocol server generates the query response, and sends the query response to the first device, where the query response includes the IP address information of the second device.

Further, the reverse address translation protocol server and the access point are a same device. The first device sends the query request to the access point, where the query request includes the Mac address of the second device, and the query request is used to query the IP address information of the second device. The first device receives the query response sent by the access point. The access point stores the Mac address and the IP address that are of the second device, and the mapping relationship between the two addresses. After acquiring the query request that includes the Mac address of the second device, the access point acquires the IP address corresponding to the Mac address, and generates the query response, where the query response includes the IP address information of the second device.

In an embodiment of the present invention, the method further includes: sending, by the first device, a first capability negotiation request to the second device by using the access point; and receiving, by the first device, a first capability negotiation response sent by the second device, where the first capability negotiation response is a response of the second device to the first capability negotiation request. Specifically, after the first device and the second device complete service discovery, the first device and the second device enter a capability negotiation phase.

In an implementation manner of this embodiment of the present invention, the first device sends the first capability negotiation request to the second device by using the access point, where the first capability negotiation request may be a provision discovery Request. The first device encapsulates the provision discovery Request management frame into a data frame of the first capability negotiation request, where address information included in a frame header of the data frame may be successively: the address information of the access point, address information of the first device, and the address information of the second device. The first device sends the data frame of the first capability negotiation request to the access point. After receiving the data frame of the first capability negotiation request, the access point changes addresses in the frame header of the data frame, and address information included in a frame header of the changed data frame may be successively: the address information of the second device, the address information of the access point, and the address information of the first device. The access point sends, to the second device, the capability negotiation request whose frame header includes changed address information. After receiving the first capability negotiation request, the second device acquires the provision discovery Request, and obtains capability negotiation information, such as a network connection requirement, of the first device by means of parsing. Specifically, the first device may have multiple network connection requirements. First, the first device requests to play a group owner (Group Owner, GO) role during interaction with the second device. Second, the first device requests to play a group client (Group Client) role during interaction with the second device. Third, an identity of the first device is not limited during interaction with the second device, and the first device can be a group owner, or can be a group client. Fourth, the first device requests to perform transmission with the second device by using an existing network connection of the access point. That the first device requests to perform transmission with the second device by using an existing network connection of the access point can be specifically implemented by adding, by the first device in the provision discovery Request, indication information of performing transmission by using the existing network connection of the access point. The second device determines, according to a condition of the second device, whether the network connection requirement of the first device can be accepted. The network connection requirement herein may be a requirement of setting up a connection in a case in which no network connection is available, or may be a requirement of how to perform upper-layer service transmission after there is already a network connection.

Optionally, when the second device cannot meet the network connection requirement of the first device, the second device generates the first capability negotiation response, where the first capability negotiation response may be a provision discovery Response, and the first capability negotiation response is used to notify the first device that the second device cannot meet the network connection requirement of the first device. Interaction between the first device and the second device ends. The second device may encapsulate the provision discovery Response management frame into a data frame of a capability negotiation response, and send the first capability negotiation response to the first device by using the access point, or the second device may directly send the provision discovery Response management frame to the first device without using the access point.

Optionally, when the second device can meet the network connection requirement of the first device, the second device generates the first capability negotiation response, where the first capability negotiation response may be a provision discovery Response, and the first capability negotiation response is used to notify the first device that the second device can meet the network connection requirement of the first device, and agree on the network connection requirement of the first device. The second device may encapsulate the provision discovery Response management frame into a data frame of a capability negotiation response, and send the first capability negotiation response to the first device by using the access point, or the second device may directly send the provision discovery Response management frame to the first device without using the access point.

Optionally, after the second device acquires the first capability negotiation request of the first device and acquires the network connection requirement of the first device, the second device generates the first capability negotiation response, where the first capability negotiation response may be a provision discovery Response, and the first capability negotiation response is used to notify the first device that the second device has learned the network connection requirement of the first device, but the first capability negotiation response does not include substantial information about whether the second device agrees on the network connection requirement of the first device. After sending the first capability negotiation response (provision discovery Response) to the first device, the second device may present information included in the first capability negotiation request to a user. After acquiring an instruction of the user, the second device may send a second capability negotiation request to the first device by using the access point, where the second capability negotiation request may be a Follow-on provision discovery Request, and the second capability negotiation request is used to notify the first device whether the second device agrees on the network connection requirement of the first device. The second device may encapsulate the Follow-on provision discovery Request management frame into a data frame of the second capability negotiation request, and send the data frame of the second capability negotiation request to the first device by using the access point and according to the foregoing frame header setting rule of a data frame, or the second device may directly send the Follow-on provision discovery Request management frame to the first device without using the access point. After acquiring the second capability negotiation request sent by the second device, the first device generates a second capability negotiation response, where the second capability negotiation response may be a Follow-on provision discovery Response, and the second capability negotiation response is used to notify the second device that the first device has learned an attitude of the second device towards the network connection requirement. The first device may encapsulate the Follow-on provision discovery Response management frame into a data frame of the second capability negotiation response, and send the data frame of the second capability negotiation response to the second device by using the access point and according to the foregoing frame header setting rule of a data frame, or the first device may directly send the Follow-on provision discovery Response management frame to the second device without using the access point.

In an implementation manner of this embodiment of the present invention, neither an exchange of the first capability negotiation request and the first capability negotiation response nor an exchange of the second capability negotiation request and the second capability negotiation response may be performed by forwarding by the access point. Another possible exchange manner includes: optionally, an exchange of a message can be directly performed between the first device and the second device. That is, the first device directly sends the first capability negotiation request to the second device, and after the second device acquires the first capability negotiation request and generates the first capability negotiation response, the second device directly sends the first capability negotiation response to the first device.

In an implementation manner of this embodiment of the present invention, the access point may partially participate in an exchange of the first capability negotiation request and the first capability negotiation response and an exchange of the second capability negotiation request and the second capability negotiation response. For example, the first device sends the first capability negotiation request to the second device by using the access point, and after the second device acquires the first capability negotiation request and generates the first capability negotiation response, the second device directly sends the first capability negotiation response to the first device. For another example, the first device directly sends the first capability negotiation request to the second device, and after the second device acquires the first capability negotiation request and generates the first capability negotiation response, the second device sends the first capability negotiation response to the first device by using the access point.

This embodiment of the present invention sets no limitation on a possible exchange form.

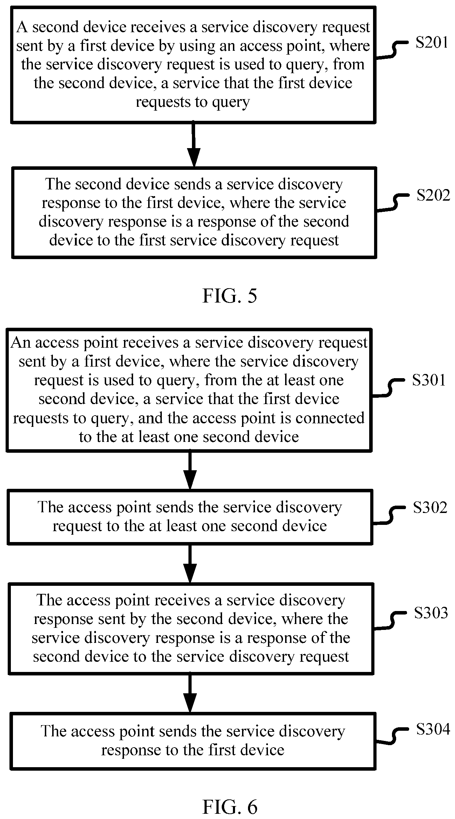

Specifically, as shown in FIG. 5, a service discovery method provided in an embodiment of the present invention may include the following steps, and the method may be executed by a discovery responding party.
S201. A second device receives a service discovery request sent by a first device by using an access point, where the service discovery request is used to query, from the second device, a service that the first device requests to query.

Specifically, in this embodiment of the present invention, the first device is a discovery query party, and the second device is the discovery responding party. The first device is connected to the access point, and the second device is connected to the access point.

The first device sends the service discovery request to the second device, where the service discovery request may include information about the service that the first device requests to query, and the service discovery request is used to query, from the second device, the service that the first device requests to query. After receiving the service discovery request, the second device acquires the information about the service that the first device requests to query. Optionally, the service discovery request is in a format of a data frame that includes a frame header and a frame body. Address information included in the frame header of the data frame follows the above-mentioned rule, and may be adjusted according to a difference in a sender and a receiver of the data frame. When the data frame is a data frame sent by a device to the access point, addresses in a frame header of the data frame are successively: A1, A2, and A3, where A1 is an address of a direct receiver, A2 is an address of a direct sender, and A3 is a final target address. When the data frame is a data frame sent by the access point to a device, A1 is an address of a direct receiver and is also a target address, A2 is an address of a direct sender, and A3 is an initial source address. For example, address information in a frame header of the data frame received by the second device, forwarded by the access point, and sent by the first device may successively include: address information of the second device, address information of the access point, and address information of the first device.

Optionally, the service discovery request may be a Probe Request. When the service discovery request is a Probe Request, the service discovery response is a Probe Response. The Probe Response is a response of the second device to the Probe Request sent by the first device.

Optionally, the service discovery request may be a Service Discovery Request. When the service discovery request is a Service Discovery Request, the service discovery response is a Service Discovery Response. The Service Discovery Response is a response of the second device to the Service Discovery Request sent by the first device.
S202. The second device sends a service discovery response to the first device, where the service discovery response is a response of the second device to the service discovery request.

Specifically, after the second device acquires the information about the service that the first device requests to query, and when the second device supports the service that the first device requests to query, the second device generates the service discovery response. Optionally, the service discovery response may include only information that the second device supports the service, and does not involve information about the service itself, such as a type of the service and specific content of the service. Optionally, the service discovery response may include the service that is supported by the at least one second device and the first device requests to query, and the service discovery response not only includes information that the second device supports the service, but also includes information about the service itself, such as a type of the service and specific content of the service.

Optionally, the second device may directly send the service discovery response to the first device without using the access point. In this case, the service discovery response is in a format of a management frame.

Optionally, the second device may send the service discovery response to the first device by using the access point, where the service discovery response is in a format of a data frame. A frame header of a data frame of the service discovery response sent by the second device to the access point successively includes: an address of the access point, an address of the second device, and an address of the first device. After receiving the data frame of the service discovery response, the access point changes address information in the frame header of the data frame of the service discovery response, and addresses in a frame header of the changed data frame successively include: the address of the first device, the address of the access point, and the address of the second device.

Optionally, the service discovery response includes IP address information of the second device. For example, when the service discovery request is a Probe Request, the Probe Response management frame includes the IP address information of the second device, or a data frame that includes the Probe Response includes the IP address information of the second device. Alternatively, when the service discovery response is a Service Discovery Response, the Service Discovery Response management frame includes the IP address information of the second device, or a data frame that includes the Service Discovery Response includes the IP address information of the second device.

In this embodiment of the present invention, in a scenario in which multiple electronic devices are all connected to an access point, a service discovery message exchange among the multiple electronic devices can be implemented without disconnecting the electronic devices from the access point, thereby improving service discovery efficiency, and further improving intercommunication efficiency.

In an embodiment of the present invention, the method further includes: receiving, by the second device, a first capability negotiation request sent by the first device; and sending, by the second device, a first capability negotiation response to the first device, where the first capability negotiation response is a response of the second device to the first capability negotiation request. Specifically, after the first device acquires the service discovery response of the second device, the first device learns whether the second device supports the service that the first device requests to query. In a case in which the second device supports the service that the first device requests to query, the first device sends the first capability negotiation request to the second device, where the first capability negotiation request may be a provision discovery Request. The first device may send the first capability negotiation request to the second device by using the access point, and in this case, the first capability negotiation request is in a format of a data frame. Alternatively, the first device may directly send the first capability negotiation request to the second device, and in this case, the first capability negotiation request is in a format of a management frame.

After acquiring the first capability negotiation request sent by the first device, the second device sends a second capability negotiation response to the first device, where the first capability negotiation response may be a provision discovery Response. Optionally, the second device sends the first capability negotiation response to the first device by using the access point, and in this case, the first capability negotiation response is in a format of a data frame. Alternatively, optionally, the second device may directly send the first capability negotiation response to the first device, and in this case, the first capability negotiation response is in a format of a management frame.

Optionally, the first capability negotiation response includes the IP address information of the second device. For example, the provision discovery Response management frame includes the IP address information of the second device, or a data frame that includes the provision discovery Response includes the IP address information of the second device.

In an embodiment of the present invention, the method further includes: acquiring, by the second device, a response instruction entered by a user, and sending a second capability negotiation request to the first device; and receiving, by the second device, a second capability negotiation response sent by the first device, where the second capability negotiation response is a response of the first device to the second capability negotiation request. Specifically, after the second device acquires the first capability negotiation request of the first device and acquires a network connection requirement of the first device, the second device generates the first capability negotiation response, where the first capability negotiation response is used to notify the first device that the second device has learned the network connection requirement of the first device, but the first capability negotiation response does not include substantial information about whether the second device agrees on the network connection requirement of the first device. After sending the first capability negotiation response (provision discovery Response) to the first device, the second device may present information included in the first capability negotiation request to the user. After acquiring the instruction of the user, the second device may send the second capability negotiation request to the first device by using the access point, where the second capability negotiation request may be a Follow-on provision discovery Request, and the second capability negotiation request is used to notify the first device whether the second device agrees on the network connection requirement of the first device.

Optionally, the second device acquires the response instruction entered by the user, and sends the second capability negotiation request to the first device by using the access point. The second device may encapsulate the Follow-on provision discovery Request management frame into a data frame of the second capability negotiation request, and send the data frame of the second capability negotiation request to the first device by using the access point and according to the foregoing frame header setting rule of a data frame. Alternatively, optionally, the second device may directly send the Follow-on provision discovery Request management frame to the first device without using the access point.

After acquiring the second capability negotiation request sent by the second device, the first device generates the second capability negotiation response, where the second capability negotiation response may be a Follow-on provision discovery Response, and the second capability negotiation response is used to notify the second device that the first device has learned information about the network connection requirement of the second device. The first device may encapsulate the Follow-on provision discovery Response management frame into a data frame of the second capability negotiation response, and send the data frame of the second capability negotiation response to the second device by using the access point and according to the foregoing frame header setting rule of a data frame. Alternatively, the first device may directly send the Follow-on provision discovery Response management frame to the second device without using the access point.

Optionally, the second capability negotiation request includes the IP address information of the second device. For example, the Follow-on provision discovery Request management frame includes the IP address information of the second device, or the data frame that includes the Follow-on provision discovery Request includes the IP address information of the second device.

Specifically, as shown in FIG. 6, a service discovery method provided in an embodiment of the present invention may include the following steps, and the method may be executed by an access point.
S301. The access point receives a service discovery request sent by a first device, where the service discovery request is used to query, from the at least one second device, a service that the first device requests to query, and the access point is connected to the at least one second device.

Specifically, the access point participates in interaction between the first device and the second device, the access point is connected to the first device, and the access point is connected to the at least one second device. In information exchanged between the first device and the second device, exchange information forwarded by the access point may be in a format of a data frame. The exchange information in the format of a data frame includes a frame header and a frame body part, and address information included in the frame header follows the foregoing rule. In this embodiment of the present invention, details are not repeatedly described herein.

Optionally, the service discovery request may be a Probe Request. The first device encapsulates the Probe Request into a data frame, and the access point receives the data frame that includes the Probe Request and is sent by the first device.

Optionally, the service discovery request may be a Service Discovery Request. The first device encapsulates the Service Discovery Request into a data frame, and the access point receives the data frame that includes the Service Discovery Request and is sent by the first device.
S302. The access point sends the service discovery request to the at least one second device.

Optionally, the service discovery request is in the format of a data frame, and the first device sends the service discovery request in a unicast manner by using the access point. After the access point receives the service discovery request sent by the first device, the access point changes address information included in a frame header of a data frame of the service discovery request, and sends the changed data frame to the at least one second device. The address information in the frame header of the data frame received by the access point and sent by the first device may successively include: address information of the access point, address information of the first device, and address information of the second device. The access point changes addresses in the frame header of the data frame. Address information in a frame header of the changed data frame of the service discovery request sent by the access point successively includes: the address information of the second device, the address information of the access point, and the address information of the first device. The access point sends the changed data frame to the at least one second device.

Optionally, the service discovery request is in the format of a data frame, and the access point broadcasts the service discovery request. Specifically, the first device broadcasts the service discovery request by using the access point. In this case, address information in a frame header of the data frame received by the access point and sent by the first device may successively include: address information of the access point, address information of the first device, and a broadcast address. The access point changes addresses in the frame header of the data frame. Address information in a frame header of the changed data frame of the service discovery request broadcast by the access point successively includes: the broadcast address, an address of the access point, and an address of the first device. The access point broadcasts the changed data frame.
S303. The access point receives a service discovery response sent by the second device, where the service discovery response is a response of the second device to the service discovery request.

When the second device supports the service that the first device requests to query, the second device generates the service discovery response. Optionally, the service discovery response may include only information that the second device supports the service, and does not involve information about the service itself, such as a type of the service and specific content of the service. Optionally, the service discovery response may include the service that is supported by the at least one second device and the first device requests to query, and the service discovery response not only includes information that the second device supports the service, but also includes information about the service itself, such as a type of the service and specific content of the service.

Optionally, the service discovery request is a Probe Request, and the service discovery response is a Probe Response. The Probe Response is a response of the second device to the Probe Request sent by the first device. Optionally, the service discovery response includes IP address information of the second device, and the Probe Response includes the IP address information of the second device.

Optionally, the service discovery request is a Service Discovery Request, and the service discovery response is a Service Discovery Response. The Service Discovery Response is a response of the second device to the Service Discovery Request sent by the first device. Optionally, the service discovery response includes IP address information of the second device, and the Service Discovery Response includes the IP address information of the second device.
S304. The access point sends the service discovery response to the first device.

Specifically, after the access point acquires the service discovery response of the second device, the access point changes address information included in addresses in a frame header of a data frame of the service discovery response. Address information included in a frame header of the changed data frame of the service discovery response is successively: the address information of the first device, the address information of the access point, and the address information of the second device. The access point sends the service discovery response to the first device. After acquiring the service discovery response, the first device acquires information about whether the second device supports the service included in the service discovery request, and learns a service supported by the at least one second device.

In this embodiment of the present invention, in a scenario in which multiple electronic devices are all connected to an access point, a service discovery message exchange among the multiple electronic devices can be implemented without disconnecting the electronic devices from the access point, thereby improving service discovery efficiency, and further improving intercommunication efficiency.

In an embodiment of the present invention, the service discovery response includes a MAC address of the second device. After the access point sends the service discovery response to the first device, the method further includes: receiving, by the access point, a query request sent by the first device, where the query request includes the MAC address of the second device, and the query request is used to query IP address information of the second device; and sending, by the access point, a query response to the first device, where the query response includes the IP address information of the second device. Before the first device and the second device set up an ASP session, the first device may acquire the IP address information of the second device according to the reverse address translation protocol (Reverse Address Resolution Protocol, RARP). Specifically, the first device acquires Mac address information of the second device. The first device sends an address query request to the access point, and requests to acquire the IP address information of the second device according to the Mac address of the second device, where the address query request includes the MAC address of the second device. The access point stores the Mac address and an IP address that are of the second device, and a mapping relationship between the two addresses. After receiving the address query request sent by the first device, the access point acquires the MAC address of the second device, and the access point acquires the IP address of the second device according to the MAC address of the second device. The access point generates the query response, and sends the query response to the first device, where the query response includes the IP address information of the second device.

In an embodiment of the present invention, the method further includes: receiving, by the access point, a first capability negotiation request sent by the first device, where the first capability negotiation response is in a format of a data frame; sending, by the access point, the first capability negotiation request to the second device; receiving, by the access point, a first capability negotiation response sent by the second device, where the capability negotiation response is a response of the second device to the capability negotiation request, and the first capability negotiation response is in a format of a data frame; and sending, by the access point, the first capability negotiation response to the first device. The first capability negotiation request may be a provision discovery Request, and the first device encapsulates the provision discovery Request management frame into a data frame of the first capability negotiation request, and sends the data frame of the first capability negotiation request to the access point. After receiving the data frame of the first capability negotiation request, the access point changes addresses in a frame header of the data frame, and address information included in a frame header of the changed data frame may be successively: the address information of the second device, the address information of the access point, and the address information of the first device. The access point sends, to the second device, the capability negotiation request whose frame header includes changed address information. After receiving the first capability negotiation request, the second device acquires the provision discovery Request, obtains a network connection requirement of the first device by means of parsing, and generates the first capability negotiation response. The first capability negotiation response may be a provision discovery Response. The second device encapsulates the provision discovery Response into a data frame of the first capability negotiation response, and sends the data frame of the first capability negotiation response to the access point. After receiving the data frame of the first capability negotiation response, the access point changes addresses in a frame header of the data frame, and sends, to the first device, the capability negotiation request whose frame header includes changed address information.

Optionally, the first capability negotiation response includes the IP address information of the second device, that is, the data frame that is of the first capability negotiation response and includes the provision discovery Response includes the IP address information of the second device.

Further, in this embodiment of the present invention, the method further includes: receiving, by the access point, a second capability negotiation request sent by the second device, where the second capability negotiation request is in a format of a data frame; sending, by the access point, the second capability negotiation request to the first device; receiving, by the access point, a second capability negotiation response sent by the first device, where the second capability negotiation response is a response of the first device to the second capability negotiation request, and the second capability negotiation response is in a format of a data frame; and sending, by the access point, the second capability negotiation response to the second device.

Specifically, after the second device acquires the first capability negotiation request of the first device and acquires the network connection requirement of the first device, the second device generates the first capability negotiation response, where the first capability negotiation response is used to notify the first device that the second device has learned the network connection requirement of the first device, but the first capability negotiation response does not include substantial information about whether the second device agrees on the network connection requirement of the first device. It is implemented, by exchanging a second capability negotiation message, that the second device confirms that the first device confirms the network connection requirement with the second device. The second capability negotiation request may be a Follow-on provision discovery Request. The second device may encapsulate the Follow-on provision discovery Request into a data frame of the second capability negotiation request, and the access point receives the data frame that is of the second capability negotiation request and sent by the second device. The access point changes, according to the foregoing frame header setting rule of a data frame, address information included in a frame header of the data frame of the second capability negotiation request, and sends, to the first device, the second capability negotiation request whose frame header includes changed address information. After acquiring the second capability negotiation request, the first device generates the second capability negotiation response. The first device encapsulates a Follow-on provision discovery Response into a data frame of the second capability negotiation response, and sends the data frame of the second capability negotiation response to the access point according to the foregoing frame header setting rule of a data frame. After acquiring the data frame of the second capability negotiation response, the access point changes, according to the foregoing frame header setting rule of a data frame, address information included in a frame header of the data frame of the second capability negotiation response, and sends the changed data frame of the second capability negotiation response to the second device.

Optionally, the second capability negotiation request includes the IP address information of the second device, that is, the data frame that includes the Follow-on provision discovery Response includes the IP address information of the second device.

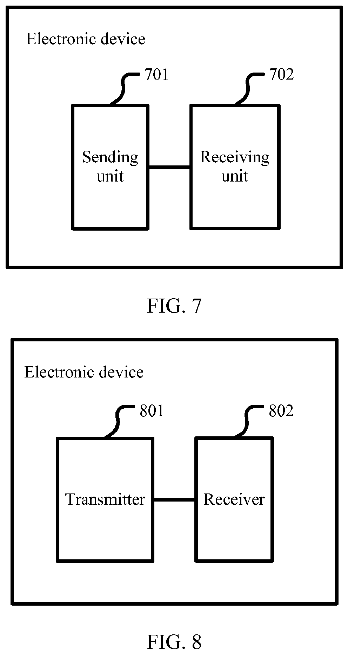

Referring to FIG. 7, FIG. 7 is a schematic structural diagram of an electronic device according to an embodiment of the present invention. An electronic device, which may also be referred to as user equipment (UE, User Equipment), mobile user equipment, or the like, may communicate with one or more core networks by using a radio access network (for example, RAN, Radio Access Network). For example, the electronic device is a mobile phone (or referred to as a "cellular" phone) and a computer. For example, the electronic device may be a portable, pocket-sized, handheld, computer built-in, or vehicle-mounted mobile apparatus, which exchanges voice and/or data with a radio access network. The electronic device may be a smart phone, a tablet computer (Tablet Personal Computer), a personal digital assistant (personal digital assistant, PDA for short), a mobile Internet device (Mobile Internet Device, MID), a wearable device (Wearable Device), or the like. The electronic device provided in this embodiment of the present invention includes a sending unit 701 and a receiving unit 702, where the sending unit 701 is connected to the receiving unit 702. Specifically,
the sending unit 701 is configured to send, by using an access point, a service discovery request to at least one second device connected to the access point, where the service discovery request is used to query, from the at least one second device, a service that the electronic device requests to query. Specifically, the electronic device is connected to the access point, and the access point is connected to at least two devices. In addition to the electronic device, the access point is at least connected to the at least one second device. Optionally, the service discovery request sent by the sending unit 701 may be a Probe Request. Optionally, the service discovery request sent by the sending unit 701 may be a Service Discovery Request. Optionally, the sending unit 701 may send two service discovery requests by using the access point, where a first service discovery request may be a Probe Request, and a second service discovery request may be a Service Discovery Request.

The receiving unit 702 is configured to receive a service discovery response sent by the at least one second device, where the service discovery response is a response of the at least one second device to the service discovery request. After receiving the service discovery request sent by the access point, the second device parses the service discovery request, and acquires a requirement, of the electronic device, of acquiring service information. When the second device supports the service that the electronic device requests to query, the second device generates the service discovery response. Optionally, the service discovery response may include only information that the second device supports the service, and does not involve information about the service itself, such as a type of the service and specific content of the service. Optionally, the service discovery response may include the service that is supported by the at least one second device and the electronic device requests to query, and the service discovery response not only includes information that the second device supports the service, but also includes information about the service itself, such as a type of the service and specific content of the service. The receiving unit 702 receives the service discovery response and acquires specific information, of the service, included in the service response. Optionally, when the service discovery request sent by the sending unit 701 is a Probe Request, the service discovery response received by the receiving unit 702 is a Probe Response, where the Probe Response is a response of the second device to the Probe Request sent by the electronic device. Optionally, when the service discovery request sent by the sending unit 701 is a Service Discovery Request, the service discovery response is a Service Discovery Response, where the Service Discovery Response is a response of the second device to the Service Discovery Request sent by the electronic device.

In this embodiment of the present invention, in a scenario in which multiple electronic devices are all connected to an access point, a service discovery message exchange among the multiple electronic devices can be implemented without disconnecting the electronic devices from the access point, thereby improving service discovery efficiency, and further improving intercommunication efficiency.

In an embodiment of the present invention, the service discovery request is in a format of a data frame. The sending unit is specifically configured to broadcast the service discovery request by using the access point, where a frame header of a data frame of the service discovery request sent by the sending unit to the access point successively includes: an address of the access point, an address of the electronic device, and a broadcast address; and a frame header of the data frame of the service discovery request broadcast by the sending unit by using the access point successively includes: the broadcast address, the address of the access point, and the address of the electronic device. The format of a data frame includes a frame header and a frame body, where the frame header of the data frame includes address information of the service discovery request. After receiving the data frame of the service discovery request sent by the sending unit, the access point changes an address format in the frame header of the data frame, to change address information (which is successively: the address of the access point, the address of the electronic device, and the broadcast address) included in the frame header of the original data frame to address information (which is successively: the broadcast address, the address of the access point, and the address of the electronic device) included in the frame header of the data frame of the service discovery request broadcast by the access point. The access point broadcasts the data frame that is of the service discovery request and whose frame header includes changed addresses.

In an embodiment of the present invention, the service discovery request is in a format of a data frame. The sending unit is specifically configured to send the service discovery request in a unicast manner by using the access point, where a frame header of a data frame of the service discovery request sent by the sending unit to the access point successively includes: an address of the access point, an address of the electronic device, and an address of the second device; and a frame header of a data frame of the service discovery request sent by the sending unit in a unicast manner by using the access point successively includes: the address of the second device, the address of the access point, and the address of the electronic device. The format of a data frame includes a frame header and a frame body, where the frame header of the data frame includes address information of the service discovery request. After receiving the data frame of the service discovery request sent by the sending unit, the access point changes an address format in the frame header of the data frame, to change address information (which is successively: the address of the access point, the address of the electronic device, and the address of the second device) included in the frame header of the original data frame to address information (which is successively: the address of the second device, the address of the access point, and the address of the electronic device) included in the frame header of the data frame of the service discovery request broadcast by the access point. The access point sends, in a unicast manner, the data frame that is of the service discovery request and whose frame header includes changed addresses.

In the foregoing embodiment of the present invention, a frame body part of the data frame of the service discovery request sent by the sending unit includes a frame body part of a probe request frame or a frame body part of a service discovery request frame. Specifically, the data frame of the service discovery request includes a frame header and a frame body. Both the probe request frame and the service discovery request frame are management frames, where the management frame also includes a frame header and a frame body. The probe request frame is a Probe Request, and the service discovery request frame is a service discovery Request. The frame body part of the data frame of the service discovery request may include a frame header and a frame body of the probe request frame, or may include only the frame body part of the probe request frame. Similarly, the frame body part of the data frame of the service discovery request may include a frame header and a frame body of the service discovery request frame, or may include only the frame body part of the service discovery request frame.

In the foregoing embodiment of the present invention, the receiving unit is specifically configured to receive the service discovery response sent by the at least one second device by using the access point, where the service discovery response is in a format of a data frame. Specifically, after receiving the service discovery request, the second device can respond to the service discovery request and send the service discovery response to the electronic device. The second device may send the service discovery response to the electronic device by using the access point, where the service discovery response is in the format of a data frame. For a format in a frame header of the data frame, reference may be made to the foregoing rule. Alternatively, the second device may directly send the service discovery response to the electronic device without using the access point, and in this case, the service discovery response is a management frame.

In the foregoing embodiment of the present invention, the service discovery response received by the receiving unit includes IP address information of the second device.

In the foregoing embodiment of the present invention, the service discovery response includes a MAC address of the second device. The sending unit is further configured to: after the receiving unit receives the service discovery response sent by the at least one second device, send a query request to a reverse address translation protocol server, where the query request includes the Mac address of the second device, and the query request is used to query IP address information of the second device; and the receiving unit is further configured to receive a query response sent by the reverse address translation protocol server, where the query response includes the IP address information of the second device. Specifically, the reverse address translation protocol server stores the Mac address and an IP address that are of the second device, and a mapping relationship between the two addresses. The electronic device may acquire the Mac address, of the second device, included in the service discovery response. After acquiring the Mac address of the second device, the first device sends the query request to the reverse address translation protocol server, and acquires the IP address of the second device. In a possible implementation manner, the reverse address translation protocol server and the access point may be a same device. The first device may also send the query request to the access point, and acquire the IP address information of the second device.

Referring to FIG. 8, FIG. 8 is a schematic structural diagram of an electronic device according to an embodiment of the present invention. The electronic device provided in this embodiment of the present invention includes a transmitter 801 and a receiver 802, where the transmitter 801 is connected to the receiver 802. Specifically,
the transmitter 801 is configured to send, by using an access point, a service discovery request to at least one second device connected to the access point, where the service discovery request is used to query, from the at least one second device, a service that the electronic device requests to query. Specifically, the electronic deviceis connected to the access point, and the access point is connected to at least two devices. In addition to the first device, the access point is at least connected to the at least one second device. Optionally, the service discovery request sent by the transmitter 801 may be a Probe Request. Optionally, the service discovery request sent by the transmitter 801 may be a Service Discovery Request. Optionally, the transmitter 801 may send two service discovery requests by using the access point, where a first service discovery request may be a Probe Request, and a second service discovery request may be a Service Discovery Request.

The receiver 802 is configured to receive a service discovery response sent by the at least one second device, where the service discovery response is a response of the at least one second device to the service discovery request. After receiving the service discovery request sent by the access point, the second device parses the service discovery request. When the second device supports the service that the electronic devicerequests to query, the second device generates the service discovery response. Optionally, the service discovery response may include only information that the second device supports the service, and does not involve information about the service itself, such as a type of the service and specific content of the service. Optionally, the service discovery response may include the service that is supported by the at least one second device and the electronic devicerequests to query, and the service discovery response not only includes information that the second device supports the service, but also includes information about the service itself, such as a type of the service and specific content of the service. The receiver 802 receives the service discovery response and acquires specific information, of the service, included in the service response. Optionally, when the service discovery request sent by the receiver 802 is a Probe Request, the service discovery response received by the receiver 802 is a Probe Response, where the Probe Response is a response of the second device to the Probe Request sent by the first device. Optionally, when the service discovery request sent by the sending unit 701 is a Service Discovery Request, the service discovery response is a Service Discovery Response, where the Service Discovery Response is a response of the second device to the Service Discovery Request sent by the first device.

In this embodiment of the present invention, in a scenario in which multiple electronic devices are all connected to an access point, a service discovery message exchange among the multiple electronic devices can be implemented without disconnecting the electronic devices from the access point, thereby improving service discovery efficiency, and further improving intercommunication efficiency.

In an embodiment of the present invention, the service discovery request is in a format of a data frame. The transmitter is specifically configured to broadcast the service discovery request by using the access point, where a frame header of a data frame of the service discovery request sent by the transmitter to the access point successively includes: an address of the access point, an address of the first device, and a broadcast address; and a frame header of the data frame of the service discovery request sent by the transmitter and broadcast by using the access point successively includes: the broadcast address, the address of the access point, and the address of the first device. The format of a data frame includes a frame header and a frame body, where the frame header of the data frame includes address information of the service discovery request. After receiving the data frame of the service discovery request sent by the sending unit, the access point changes an address format in the frame header of the data frame, to change address information (which is successively: the address of the access point, the address of the first device, and the broadcast address) included in the frame header of the original data frame to address information (which is successively: the broadcast address, the address of the access point, and the address of the first device) included in the frame header of the data frame of the service discovery request broadcast by the access point. The access point broadcasts the data frame that is of the service discovery request and whose frame header includes changed addresses.

In an embodiment of the present invention, the service discovery request is in a format of a data frame. The transmitter is specifically configured to send the service discovery request in a unicast manner by using the access point, where a frame header of a data frame of the service discovery request sent by the transmitter to the access point successively includes: an address of the access point, an address of the first device, and an address of the second device; and a frame header of the data frame of the service discovery request sent by the transmitter and unicast by using the access point successively includes: the address of the second device, the address of the access point, and the address of the first device. The format of a data frame includes a frame header and a frame body, where the frame header of the data frame includes address information of the service discovery request. After receiving the data frame of the service discovery request sent by the sending unit, the access point changes an address format in the frame header of the data frame, to change address information (which is successively: the address of the access point, the address of the first device, and the address of the second device) included in the frame header of the original data frame to address information (which is successively: the address of the second device, the address of the access point, and the address of the first device) included in the frame header of the data frame of the service discovery request broadcast by the access point. The access point sends, in a unicast manner, the data frame that is of the service discovery request and whose frame header includes changed addresses.

In the foregoing embodiment of the present invention, a frame body part of the data frame of the service discovery request sent by the transmitter includes a frame body part of a probe request frame or a frame body part of a service discovery request frame. Specifically, the data frame of the service discovery request includes a frame header and a frame body. Both the probe request frame and the service discovery request frame are management frames, where the management frame also includes a frame header and a frame body. The probe request frame is a Probe Request, and the service discovery request frame is a service discovery Request. The frame body part of the data frame of the service discovery request may include a frame header and a frame body of the probe request frame, or may include only the frame body part of the probe request frame. Similarly, the frame body part of the data frame of the service discovery request may include a frame header and a frame body of the service discovery request frame, or may include only the frame body part of the service discovery request frame.

In the foregoing embodiment of the present invention, the receiver is specifically configured to receive the service discovery response sent by the at least one second device by using the access point, where the service discovery response is in a format of a data frame. Specifically, after receiving the service discovery request, the second device can respond to the service discovery request and send the service discovery response to the first device. The second device may send the service discovery response to the electronic device by using the access point, where the service discovery response is in the format of a data frame. For a format in a frame header of the data frame, reference may be made to the foregoing rule. Alternatively, the second device may directly send the service discovery response to the electronic device without using the access point, and in this case, the service discovery response is a management frame.

In the foregoing embodiment of the present invention, the service discovery response includes IP address information of the second device.

In the foregoing embodiment of the present invention, the service discovery response includes a MAC address of the second device. The transmitter is further configured to: after the receiver receives the service discovery response sent by the at least one second device, send a query request to a reverse address translation protocol server, where the query request includes the Mac address of the second device, and the query request is used to query IP address information of the second device; and the receiver is further configured to receive a query response sent by the reverse address translation protocol server, where the query response includes the IP address information of the second device. Specifically, the reverse address translation protocol server stores the Mac address and an IP address that are of the second device, and a mapping relationship between the two addresses. The electronic devicemay acquire the Mac address, of the second device, included in the service discovery response. After acquiring the Mac address of the second device, the electronic devicesends the query request to the reverse address translation protocol server, and acquires the IP address of the second device. In a possible implementation manner, the reverse address translation protocol server and the access point may be a same device. The electronic devicemay also send the query request to the access point, and acquire the IP address information of the second device.

It should be noted that in the foregoing embodiments of the present invention, for the foregoing same or corresponding technical features, reference may be made to each other. Embodiments of the present invention may include various combinations of the foregoing technical features.

In conclusion, the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the present invention as defined by the appended claims.

## Claims

1. A service discovery method, wherein the method comprises:
1.1 sending (S101), by a first device, to an access point (AP) a service discovery request in a format of a data frame having a frame header portion with addresses and a payload portion including at least a frame body part of a Wi-Fi Direct Service, WFDS, management frame and a packet type indicating the type of the management frame, wherein the service discovery request is used to query, from at least one second device connected to the access point (AP), a service that the first device requests to query; and
1.2 receiving (S102), by the first device, from the access point (AP) a service discovery response initially sent by the at least one second device, the service discovery response being in a format of a data frame having a frame header portion with addresses and a payload portion including at least a frame body part of a WFDS management frame and a packet type indicating the type of the management frame, wherein the service discovery response is a response of the at least one second device to the service discovery request.

2. The method according to claim 1, including broadcasting the service discovery request by the access point, wherein
in step 1.1 the service discovery request is sent, by the access point (AP), with adjusted addresses to the least one second device, wherein a frame header of a data frame of the service discovery request sent by the first device to the access point successively comprises: an address of the access point, an address of the first device, and a broadcast address; and
a frame header of the data frame of the service discovery request broadcast by the access point comprises the addresses adjusted successively as follows: the broadcast address, the address of the access point, and the address of the first device.

3. The method according to claim 1, sending the service discovery request in a unicast manner by the access point, wherein
in step 1.1 the service discovery request is sent by the access point (AP) with adjusted addresses to the at least one second device, wherein a frame header of a data frame of the service discovery request sent by the first device to the access point successively comprises: an address of the access point, an address of the first device, and an address of the second device; and
a frame header of the data frame of the service discovery request sent by the access point comprises the addresses successively adjusted as follows: the address of the second device, the address of the access point, and the address of the first device.

4. The method according to claim 2 or 3, wherein the frame body part of the data frame of the service discovery request comprises a frame body part of a probe request frame or a frame body part of a service discovery request frame.

5. The method according to any one of claims 1 to 4, wherein the service discovery response comprises IP address information of the second device.

6. The method according to any one of claims 1 to 4, wherein the service discovery response comprises a MAC address of the second device, and after receiving, by the first device, the service discovery response sent by the at least one second device, the method further comprises:
sending, by the first device, a query request to a reverse address translation protocol server, wherein the query request comprises the MAC address of the second device, and the query request is used to query IP address information of the second device; and
receiving, by the first device, a query response sent by the reverse address translation protocol server, wherein the query response comprises the IP address information of the second device.

7. The method according to claim 1, wherein in step 1.2 the service discovery response is sent, by the access point (AP), with adjusted addresses to the first device; wherein
a frame header of the data frame of the service discovery response sent by the second device to the access point successively comprises: an address of the access point, an address of the second device, and an address of the first device; and
a frame header of the data frame of the service discovery response sent by the access point successively comprises the addresses adjusted successively as follows: the address of the first device, the address of the access point, and the address of the second device.

8. The method according to any one of claim 7, wherein the service discovery response comprises IP address information of the second device.

9. A first device, wherein the first device comprises:
a transmitter (701, 801) adapted to send (S101) to an access point (AP) to which is connected a second device, a service discovery request in a format of a data frame having a frame header portion with addresses and a payload portion including at least a frame body part of a Wi-Fi Direct Service, WFDS, management frame and a packet type indicating the type of the management frame, wherein the service discovery request is used to query, from the at least one second device, a service that the first device requests to query; and
a receiver adapted to receive (S102), from the access point (AP), a service discovery response initially sent by the at least one second device, the service discovery response being in a format of a data frame having a frame header portion with addresses and a payload portion including at least a frame body part of a WFDS management frame and a packet type indicating the type of the management frame, wherein the service discovery response is a response of the at least one second device to the service discovery request.

## Patentansprüche

1. Diensterkennungsverfahren, wobei das Verfahren umfasst:
1.1 Senden (S101), von einer ersten Vorrichtung an einen Zugangspunkt (Access Point, AP), einer Diensterkennungsanforderung in einem Format eines Datenblocks, der einen Datenblockkopfzeilenabschnitt mit Adressen und einen Nutzdatenabschnitt aufweist, der mindestens einen Datenblockkörperteil eines Verwaltungsdatenblocks eines Wi-Fi-Direktdienstes (Wi-Fi Direct Service management frame, WFDS-Verwaltungsdatenblock) und einen Datenpakettyp enthält, der den Typ des Verwaltungsdatenblocks anzeigt, wobei die Diensterkennungsanforderung verwendet wird, um bei mindestens einer zweiten Vorrichtung, die mit dem Zugangspunkt (AP) verbunden ist, einen Dienst abzufragen, den die erste Vorrichtung Abzufragen anfordert; und
1.2 Empfangen (S102) in der ersten Vorrichtung von dem Zugangspunkt (AP) einer Diensterkennungsantwort, die ursprünglich von der mindestens einen zweiten Vorrichtung gesendet wurde, wobei die Diensterkennungsantwort in einem Format eines Datenblocks ist, der einen Datenblockkopfzeilenabschnitt mit Adressen und einen Nutzdatenabschnitt aufweist, der mindestens einen Datenblockkörperteil eines WFDS-Verwaltungsdatenblocks und einen Datenpakettyp enthält, der den Typ des Verwaltungsdatenblocks anzeigt, wobei die Diensterkennungsantwort eine Antwort der mindestens einen zweiten Vorrichtung auf die Diensterkennungsanforderung ist.

2. Verfahren nach Anspruch 1, das ein Verbreiten per "Broadcast" der Diensterkennungsanforderung durch den Zugangspunkt umfasst, wobei
im Schritt 1.1 die Diensterkennungsanforderung durch den Zugangspunkt (AP) mit angepassten Adressen an die mindestens eine zweite Vorrichtung gesendet wird, wobei eine Datenblockkopfzeile eines Datenblocks der von der ersten Vorrichtung an den Zugangspunkt gesendeten Diensterkennungsanforderung nacheinander umfasst:
eine Adresse des Zugangspunkts, eine Adresse der ersten Vorrichtung und eine "Broadcast"-Adresse; und
eine Datenblockkopfzeile des Datenblocks der von dem Zugangspunkt per "Broadcast" verbreiteten Diensterkennungsanforderung die angepassten Adressen nacheinander wie folgt umfasst: die "Broadcast"-Adresse, die Adresse des Zugangspunkts und die Adresse der ersten Vorrichtung.

3. Verfahren nach Anspruch 1, das ein Senden der Diensterkennungsanforderung per Unicast durch den Zugangspunkt, wobei
im Schritt 1.1 die Diensterkennungsanforderung durch den Zugangspunkt (AP) mit angepassten Adressen an die mindestens eine zweite Vorrichtung gesendet wird, wobei
eine Datenblockkopfzeile eines Datenblocks der von der ersten Vorrichtung an den Zugangspunkt gesendeten Diensterkennungsanforderung nacheinander umfasst: eine Adresse des Zugangspunkts, eine Adresse der ersten Vorrichtung und eine Adresse der zweiten Vorrichtung und,
eine Datenblockkopfzeile des Datenblocks der von dem Zugangspunkt gesendeten Diensterkennungsanforderung die angepassten Adressen nacheinander wie folgt umfasst: die Adresse der zweiten Vorrichtung, die Adresse des Zugangspunkts und die Adresse der ersten Vorrichtung.

4. Verfahren nach Anspruch 2 oder 3, wobei der Datenblockkörperteil des Datenblocks der Diensterkennungsanforderung einen Datenblockkörperteil eines Prüfanforderungsdatenblocks oder einen Datenblockkörperteil eines Diensterkennungsanforderungsdatenblocks umfasst.

5. Verfahren nach einem der Ansprüche 1 bis 4, wobei die Diensterkennungsantwort IP-Adresseninformationen der zweiten Vorrichtung umfasst.

6. Verfahren nach einem der Ansprüche 1 bis 4, wobei die Diensterkennungsantwort eine MAC-Adresse der zweiten Vorrichtung umfasst und wobei das Verfahren nach dem Empfangen der von der mindestens einen zweiten Vorrichtung gesendeten Diensterkennungsantwort in der ersten Vorrichtung außerdem umfasst:
Senden von der ersten Vorrichtung einer Abfrageanforderung an einen Server mit einem Adressenrückübersetzungsprotokoll, wobei die Abfrageanforderung die MAC Adresse der zweiten Vorrichtung umfasst und wobei die Abfrageanforderung verwendet wird, um die IP-Adresseninformationen der zweiten Vorrichtung abzufragen; und
Empfangen in der ersten Vorrichtung einer Abfrageantwort, die von dem Server mit dem Adressenrückübersetzungsprotokoll gesendet wird, wobei die Abfrageantwort die IP-Adresseninformationen der zweiten Vorrichtung umfasst.

7. Verfahren nach Anspruch 1, wobei im Schritt 1.2 die Diensterkennungsantwort durch den Zugangspunkt (AP) mit angepassten Adressen an die erste Vorrichtung gesendet wird; wobei
eine Datenblockkopfzeile des Datenblocks der von der zweiten Vorrichtung an den Zugangspunkt gesendeten Diensterkennungsantwort nacheinander umfasst: eine Adresse des Zugangspunkts, eine Adresse der zweiten Vorrichtung und eine Adresse der ersten Vorrichtung; und
eine Datenblockkopfzeile des Datenblocks der von dem Zugangspunkt gesendeten Diensterkennungsantwort die angepassten Adressen nacheinander wie folgt umfasst: die Adresse der ersten Vorrichtung, die Adresse des Zugangspunkts und die Adresse der zweiten Vorrichtung.

8. Verfahren nach Anspruch 7, wobei die Diensterkennungsantwort die IP-Adresseninformationen der zweiten Vorrichtung umfasst.

9. Erste Vorrichtung, wobei die erste Vorrichtung umfasst:
einen Sender (701, 801) der geeignet ist zum Senden (S101) an einen Zugangspunkt (Access Point, AP), der mit einer zweiten Vorrichtung verbunden ist, einer Diensterkennungsanforderung in einem Format eines Datenblocks, der einen Datenblockkopfzeilenabschnitt mit Adressen und einen Nutzdatenabschnitt aufweist, der mindestens einen Datenblockkörperteil eines Verwaltungsdatenblocks eines Wi-Fi-Direktdienstes (Wi-Fi Direct Service management frame, WFDS-Verwaltungsdatenblock) und einen Datenpakettyp enthält, der den Typ des Verwaltungsdatenblocks anzeigt, wobei die Diensterkennungsanforderung verwendet wird, um bei der mindestens einen zweiten Vorrichtung einen Dienst abzufragen, den die erste Vorrichtung Abzufragen anfordert; und
einen Empfänger, der geeignet ist zum Empfangen (S102) von dem Zugangspunkt (AP) einer Diensterkennungsantwort, die ursprünglich von der mindestens einen zweiten Vorrichtung gesendet wurde wobei die Diensterkennungsantwort in einem Format eines Datenblocks ist, der einen Datenblockkopfzeilenabschnitt mit Adressen und einen Nutzdatenabschnitt aufweist, der mindestens einen Datenblockkörperteil eines WFDS-Verwaltungsdatenblocks und einen Datenpakettyp enthält, der den Typ des Verwaltungsdatenblocks anzeigt, wobei die Diensterkennungsantwort eine Antwort der mindestens einen zweiten Vorrichtung auf die Diensterkennungsanforderung ist.

## Revendications

1. Procédé de découverte de service, le procédé comportant les étapes consistant à :
1.1 faire envoyer (S101), par un premier dispositif à un point d'accès (AP), une demande de découverte de service dans un format d'une trame de données dotée d'une partie d'en-tête de trame dotée d'adresses et d'une partie de charge utile comprenant au moins une partie de corps de trame d'une trame de gestion de service direct Wi-Fi, WFDS, et un type de paquet indiquant le type de la trame de gestion, la demande de découverte de service étant utilisée pour interroger, à partir d'au moins un deuxième dispositif connecté au point d'accès (AP), un service que le premier dispositif demande à interroger ; et
1.2 faire recevoir (S102), par le premier dispositif, en provenance du point d'accès (AP) une réponse de découverte de service initialement émise par le ou les deuxièmes dispositifs, la réponse de découverte de service se trouvant dans un format d'une trame de données dotée d'une partie d'en-tête de trame dotée d'adresses et d'une partie de charge utile comprenant au moins une partie de corps de trame d'une trame de gestion de WFDS et un type de paquet indiquant le type de la trame de gestion, la réponse de découverte de service étant une réponse du ou des deuxièmes dispositifs à la demande de découverte de service.

2. Procédé selon la revendication 1, comprenant la diffusion de la demande de découverte de service par le point d'accès,
lors de l'étape 1.1, la demande de découverte de service étant émise, par le point d'accès (AP), avec des adresses ajustées vers le ou les deuxièmes dispositifs,
un en-tête de trame d'une trame de données de la demande de découverte de service émise par le premier dispositif au point d'accès comportant successivement : une adresse du point d'accès, une adresse du premier dispositif, et une adresse de diffusion ; et
un en-tête de trame de la trame de données de la demande de découverte de service diffusée par le point d'accès comportant les adresses ajustées successivement comme suit : l'adresse de diffusion, l'adresse du point d'accès, et l'adresse du premier dispositif.

3. Procédé selon la revendication 1, l'envoi de la demande de découverte de service en monodiffusion par le point d'accès,
lors de l'étape 1.1 la demande de découverte de service étant émise par le point d'accès (AP) avec des adresses ajustées vers le ou les deuxièmes dispositifs,
un en-tête de trame d'une trame de données de la demande de découverte de service émise par le premier dispositif au point d'accès comportant successivement : une adresse du point d'accès, une adresse du premier dispositif, et une adresse du deuxième dispositif ; et
un en-tête de trame de la trame de données de la demande de découverte de service émise par le point d'accès comportant les adresses ajustées successivement comme suit : l'adresse du deuxième dispositif, l'adresse du point d'accès, et l'adresse du premier dispositif.

4. Procédé selon la revendication 2 ou 3, la partie de corps de trame de la trame de données de la demande de découverte de service comportant une partie de corps de trame d'une trame de demande de sonde ou une partie de corps de trame d'une trame de demande de découverte de service.

5. Procédé selon l'une quelconque des revendications 1 à 4, la réponse de découverte de service comportant des informations d'adresse IP du deuxième dispositif.

6. Procédé selon l'une quelconque des revendications 1 à 4, la réponse de découverte de service comportant une adresse MAC du deuxième dispositif, et le procédé comportant en outre, après la réception, par le premier dispositif, de la réponse de découverte de service émise par le ou les deuxièmes dispositifs, les étapes consistant à :
faire envoyer, par le premier dispositif, une demande d'interrogation à un serveur de protocole de traduction inverse d'adresses, la demande d'interrogation comportant l'adresse MAC du deuxième dispositif, et la demande d'interrogation étant utilisée pour interroger des informations d'adresse IP du deuxième dispositif ; et
faire recevoir, par le premier dispositif, une réponse d'interrogation émise par le serveur de protocole de traduction inverse d'adresses, la réponse d'interrogation comportant les informations d'adresse IP du deuxième dispositif.

7. Procédé selon la revendication 1, lors de l'étape 1.2 la réponse de découverte de service étant émise, par le point d'accès (AP), avec des adresses ajustées vers le premier dispositif ;
un en-tête de trame de la trame de données de la réponse de découverte de service émise par le deuxième dispositif au point d'accès comportant successivement : une adresse du point d'accès, une adresse du deuxième dispositif, et une adresse du premier dispositif ; et
un en-tête de trame de la trame de données de la réponse de découverte de service émise par le point d'accès comportant successivement les adresses ajustées successivement comme suit : l'adresse du premier dispositif, l'adresse du point d'accès, et l'adresse du deuxième dispositif.

8. Procédé selon la revendication 7, la réponse de découverte de service comportant des informations d'adresse IP du deuxième dispositif.

9. Premier dispositif, le premier dispositif comportant :
un émetteur (701, 801) prévu pour envoyer (S101) à un point d'accès (AP) auquel est connecté un deuxième dispositif, une demande de découverte de service dans un format d'une trame de données dotée d'une partie d'en-tête de trame dotée d'adresses et d'une partie de charge utile comprenant au moins une partie de corps de trame d'une trame de gestion de service direct Wi-Fi, WFDS, et un type de paquet indiquant le type de la trame de gestion, la demande de découverte de service étant utilisée pour interroger, à partir du ou des deuxièmes dispositifs, un service que le premier dispositif demande à interroger ; et
un récepteur prévu pour recevoir (S102), en provenance du point d'accès (AP), une réponse de découverte de service initialement émise par le ou les deuxièmes dispositifs, la réponse de découverte de service se trouvant dans un format d'une trame de données dotée d'une partie d'en-tête de trame dotée d'adresses et d'une partie de charge utile comprenant au moins une partie de corps de trame d'une trame de gestion de WFDS et un type de paquet indiquant le type de la trame de gestion, la réponse de découverte de service étant une réponse du ou des deuxièmes dispositifs à la demande de découverte de service.
